# EUROPÄISCHE PATENTSCHRIFT

(11) **EP 2 014 805 B1**
(45) Veröffentlichungstag und Bekanntmachung des Hinweises auf die Patenterteilung: **14.12.2011**
(21) Anmeldenummer: 07013688.2
(22) Anmeldetag: 12.07.2007
(51) Int. Cl.: D03C 1/14, H01F 7/14

(54) **Steuereinrichtung für eine Schaltkupplung einer Schaftmaschine**
Control device for the coupling of a dobby
Dispositif de commande pour un embrayage principal d'une ratière

(43) Veröffentlichungstag der Anmeldung: 14.01.2009
(73) Patentinhaber: Groz-Beckert KG, 72458 Albstadt (DE)
(72) Erfinder: Fäller, Armin, 72459 Albstadt (DE)
(74) Vertreter: Rüger, Barthelt & Abel Patentanwälte

(56) Entgegenhaltungen:
- US-A- 4 461 325
- US-A- 5 908 051

## Beschreibung

Die Erfindung betrifft eine Steuereinrichtung zur Steuerung einer Schaltkupplung einer Schaftmaschine, wie sie zum Antreiben von Webschäften von Webmaschinen Anwendung findet.

Solche Schaftmaschinen enthalten Schaltkupplungen, deren Steuereinrichtung beispielsweise der DE 697 01 619 T2 zu entnehmen ist. Zu der Steuereinrichtung gehört ein Träger, der oszillierend angetrieben ist. An dem Träger ist ein schwenkbar gelagerter Schaltfinger vorgesehen. In einer ersten Schwenkposition betätigt er, wenn der Träger eine Schwingbewegung ausführt, einen ersten Kipphebel, während ein zweiter Kipphebel in Ruhe bleibt. In seiner zweiten Schwenkposition betätigt der Wählfinger einen zweiten Kipphebel, während der erste Kipphebel in Ruhe bleibt. Mit den Kipphebeln wird eine Schaltkupplung gesteuert, um festzulegen, ob ein Exzenter, der einen bestimmten Webschaft antreibt, eine (halbe) Umdrehung ausführen soll oder nicht.

Zur Bewegung des Schaltfingers ist ein Elektromagnet vorgesehen, der einen mit dem Wählfinger gelenkig verbundenen Anker aufweist. Der Anker liegt mit seinem freien Ende an dem Elektromagneten an und begrenzt mit diesem einen dreieckförmigen Luftspalt. Die Betätigung des Wählfingers erfolgt gegen die Kraft einer Druckfeder, die den Wählfinger von dem Elektromagneten weg in eine der beiden Schaltpositionen drängt. Zieht der Elektromagnet den Anker gegen die Kraft dieser Druckfeder an, schwenkt der Wählhebel in seine andere mögliche Schwenkposition.

Dieser Aufbau benötigt relativ viele bewegte Teile und eine relativ hohe magnetische Erregung.

Davon ausgehend ist es Aufgabe der Erfindung, eine vereinfachte und zugleich verbesserte Schalteinrichtung für eine Schaltkupplung einer Schaftmaschine anzugeben.

Diese Aufgabe wird mit der Steuereinrichtung gemäß Anspruch 1 gelöst:

Die erfindungsgemäße Steuereinrichtung weist einen Träger auf, der im Betrieb schwingend angetrieben ist. Er kann dabei einen kurzen Betätigungshub ausführen. Dabei kann der Betätigungshub als geradlinige Bewegung oder als eine Schwenkbewegung ausgeführt sein.

Auf oder an dem Träger ist ein Wählfinger um ein Schwenkzentrum schwenkbar gelagert. Das Schwenkzentrum wird beispielsweise durch einen Stift gebildet, der eine Öffnung des Wählfingers durchgreift. An dem Wählfinger ist ein magnetisch leitfähiger Anker, beispielsweise aus einem weichmagnetischen Material, wie beispielsweise Eisen, Eisenpulver gefülltem Kunststoff oder einem Ferrit vorgesehen. In der Nachbarschaft des Wählfingers ist an dem Träger ein Elektromagnet ruhend gelagert, der zwei Pole aufweist. Der erste Pol schließt mit dem Anker einen Luftspalt ein, der kreisbogenförmig ausgebildet und zu dem Schwenkzentrum mit einem konstanten Radius R gekrümmt ist. Der zweite Pol legt einen in seiner Größe von der Schwenkbewegung des Wählfingers abhängigen Luftspalt fest. Die Größe des Luftspalts wird durch den Abstand zwischen der Oberfläche des Ankers und der Oberfläche des zweiten Pols bestimmt.

Vorzugsweise ist der Anker in unmittelbarer Nachbarschaft des Schwenkzentrums angeordnet, so dass die infolge der Schwenkbewegung des Wählfingers hervorgerufene Größenveränderung des Luftspalts gering bleibt. Dadurch hat der Elektromagnet schon am Anfang seines Arbeitshubs eine große Anzugskraft, wodurch der Wählfinger schnell beschleunigt wird und hochdynamisch schalten kann. Außerdem kann eine relativ starke Rückstellfeder Anwendung finden, so dass auch der Rückstellhub in kurzer Schaltzeit durchlaufen wird.

Die erfindungsgemäße Steuereinrichtung weist sehr wenige bewegliche Teile, nämlich nur einen Wählfinger, und lediglich ein einziges Lager auf. Dieses legt das Schwenkzentrum des Wählfingers fest. Es tritt deshalb nur eine geringe Reibung auf. Durch die Krümmung wenigstens eines der beiden Luftspalte kann dort eine Zunahme des magnetischen Widerstands beim Verschwenken des Wählfingers beispielsweise in seiner Ruheposition vermieden werden, was wiederum der Erhöhung der Anzugskraft zugute kommt.

Mit der erfindungsgemäßen Steuereinrichtung lassen sich besonders kurze Schaltzeiten und somit hohe Tourenzahlen der Webmaschine realisieren.

Der erste, gekrümmte Luftspalt ist vorzugsweise als konstanter, von einer Schwenkbewegung des Wählfingers unbeeinflusster Luftspalt ausgebildet. Damit bleibt sein magnetischer Widerstand unabhängig von der Schwenkposition des Wählfingers konstant. Der zweite Luftspalt ist vorzugsweise in seiner Größe, dem Abstand der Ankeroberfläche zu der Oberfläche des zweiten Pols, von der Schwenkstellung des Wählfingers abhängig, so dass der magnetische Widerstand des zweiten Luftspalts von der Schwenkposition des Wählfingers abhängt. Vorzugsweise beginnt der zweite Luftspalt an einer Stelle, deren Radius zum Schwenkzentrum etwa so groß ist, wie der Radius des ersten Luftspalts. Von einer entsprechenden Stelle ausgehend, kann sich der Luftspalt als Parallelspalt oder Trapezspalt ungefähr tangential zu dem gekrümmten ersten Luftspalt erstrecken.

Diese Konfiguration ist einfach, robust und leistungsfähig.

Während der zweite Luftspalt bei der vorgenannten Ausführungsform in seiner Spaltlänge veränderlich ist, so dass der magnetische Widerstand durch Verkürzung abnimmt, wenn der Wählfinger von dem Elektromagneten angezogen wird, ist es auch möglich, den zweiten Luftspalt so auszubilden, dass seine Länge konstant bleibt. Der magnetische Widerstand verändert sich durch Zunahme oder Abnahme der Luftspaltfläche beim Schwenken des Wählfingers. Dies betrifft beispielsweise den zweiten Luftspalt, während der erste Luftspalt wie oben erläutert in Länge und Fläche von der Schwenkposition des Wählfingers unabhängig sein kann. Es ist aber auch möglich, auch den ersten Luftspalt und somit den von ihm festgelegten magnetischen Widerstand von der Schwenkposition des Wählhebels abhängig zu machen, um beispielsweise ein höheres Antriebsmoment zu erzeugen.

Bei einer einfachen Ausführungsform ist dem Wählfinger ein Federmittel zugeordnet, das ihn in eine Ruheposition drängt. Der Elektromagnet zieht den Wählfinger dann gegen die Kraft des Federmittels in eine andere Schwenkposition. Für die beiden Schwenkpositionen des Wählfingers können Anschlagmittel vorgesehen sein. Beispielsweise kann das Anschlagmittel für die eine Schwenkposition, die der Wählfinger bei stromlosen Elektromagneten einnimmt, durch einen schwingungsdämpfenden Puffer gebildet sein. Das Anschlagmittel für die Anzugsposition, die der Wählfinger einnimmt, wenn der Elektromagnet bestromt wird, kann durch einen Pol des Elektromagneten gebildet sein, an dem der Anker anstößt. Zur Vermeidung eines magnetischen Klebeeffekts kann der Pol mit einer Kunststofffolie oder einer anderen dämpfenden Zwischenschicht versehen sein.

Es ist auch möglich, das Anschlagmittel durch entsprechende Anlageflächen zu bilden, die an den Schalthebeln vorgesehen sind, die von dem Wählfinger zur Betätigung ausgewählt werden. Dies hat den Vorzug, dass automatisch sichergestellt wird, dass der Wählfinger in seinen beiden alternativen Schwenklagen jeweils mit einem der beiden Schalthebel in ordnungsgemäßem Eingriff steht. Außerdem kann sichergestellt werden, dass der Anker den Pol des Elektromagneten nicht berührt, so dass die oben genannten Klebeeffekte vermieden werden.

Es ist möglich, den Wählfinger zwei Elektromagnete zuzuordnen, die beide gleichsinnig antreibend wirken, um die Schaltzeiten durch Doppelung des Antriebsmoments zu verkürzen. Es ist auch möglich, zwei gegensinnig arbeitende Elektromagnete vorzusehen, die alternativ bestromt werden, um den Wählfinger in die eine oder in die andere Position zu schwenken. Diese Ausführungsform hat den Vorteil, dass beide Schaltzeiten für beide Schwenkrichtungen des Wählfingers zwangsläufig im Wesentlichen identisch sind.

Weitere Einzelheiten vorteilhafter Ausführungsformen ergeben sich aus der Zeichnung, der Beschreibung oder Unteransprüchen. Die Beschreibung und die Zeichnung beschränken sich auf die Darstellung wesentlicher Aspekte und Elemente der Erfindung und sonstiger Gegebenheiten. Der Zeichnung sind weitere Einzelheiten zu entnehmen.

In der Zeichnung sind Ausführungsbeispiele der Erfindung veranschaulicht. Es zeigen:
- Fig. 1: einen Webschaft mit Schaftantrieb in schematischer Darstellung,
- Fig. 2: eine Kupplungsanordnung, die Bestandteil des Schaftantriebs ist, mit einer erfindungsgemäßen Steuereinrichtung,
- Fig. 3: die Steuereinrichtung der Kupplungsanordnung in schematisierter vergrößerter Darstellung in einer Bewegungsphase,
- Fig. 4: die Steuereinrichtung nach Fig. 3 in einer anderen Bewegungsphase,
- Fig. 5: eine abgewandelte Ausführungsform der Steuereinrichtung in schematisierter Darstellung,
- Fig. 6 bis 8: weitere Ausführungsformen der erfindungsgemäßen Steuereinrichtung in schematisierter Darstellung.

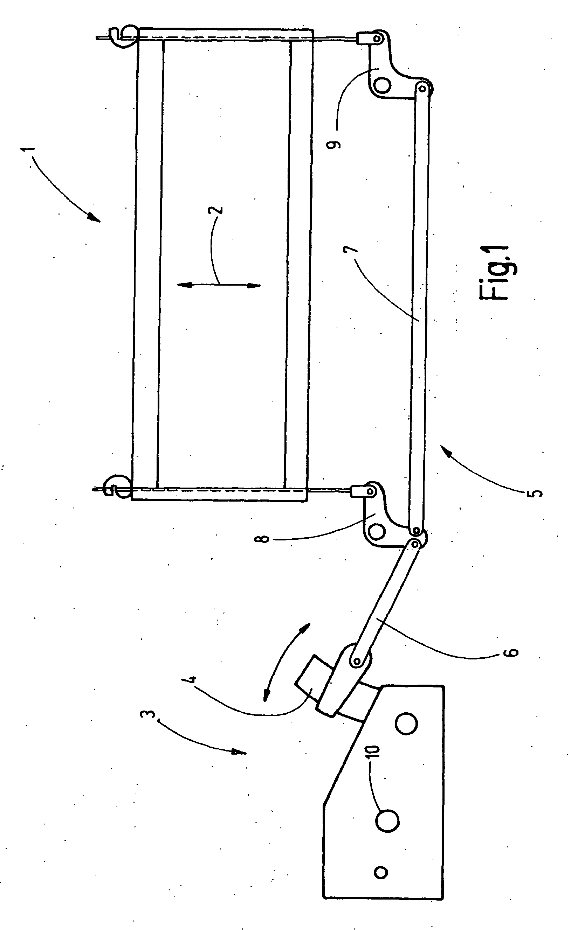

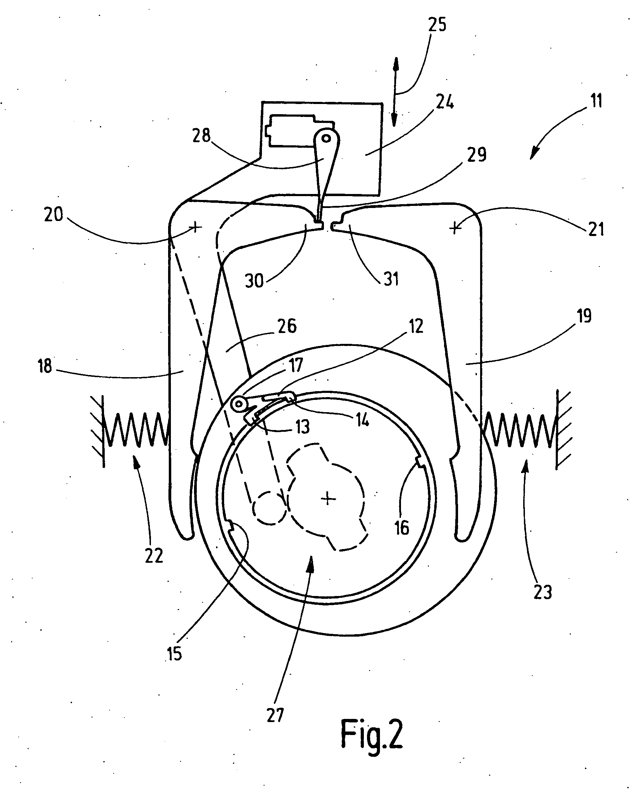

In Figur 1 ist ein Webschaft 1 einer Webmaschine veranschaulicht, der in Betrieb eine durch einen Pfeil 2 bezeichnete schwingende Vertikalbewegung ausführt. Zum Antrieb dient eine Schaftmaschine 3, von deren als Abtrieb dienenden Schwinge 4 der Webschaft 1 über ein Gestänge 5 mit Laschen 6, 7 und Winkelhebeln 8, 9 angetrieben ist. Die Schaftmaschine 4 setzt die Drehung einer zentralen Welle 10 in eine schwingende Bewegung der Schwinge 4 um. Dazu dienen Exzenter oder Kurvenscheiben, die, wie Figur 2 zeigt, über eine schaltbare Kupplungsanordnung 11 angetrieben sind. Die Kupplungsanordnung 11 weist beispielsweise eine von einer rotierend angetriebenen Scheibe getragene Wippe 12 mit ein oder mehreren Nasen 13, 14 auf, denen entsprechende Ausnehmungen 15, 16 in einer Kupplungsscheibe zugeordnet sind. Um das Ein- und Ausrasten der Nasen 13, 14 und der Ausnehmungen 15, 16 zu bewirken, läuft die Wippe 12 mit einer Schaltrolle 17 an entsprechenden Schaltflächen von Schalthebeln 18, 19 vorbei, die um entsprechende Schwenkachsen 20, 21 schwenkbar gelagert sind. Durch Federmittel 22, 23, die in Figur 2 schematisch veranschaulicht sind, sind die Schalthebel 18, 19 auf einander zu federnd vorgespannt. Zwischen den entsprechenden Schaltflächen der Schalthebel 18, 19 drehen die zu kuppelnden Scheiben, von denen zumindest eine die Wippe 12 trägt.

Außerdem gehört zu der Kupplungsanordnung ein Träger 24, der eine durch einen Pfeil 25 angedeutete oszillierende Bewegung ausführt. Er kann dazu über einen Hebel 26 von einer Kurvenscheibe 27 angetrieben sein, die von der Welle 10 angetrieben ist.

An dem Träger 24 ist ein Wählfinger 28 schwenkbar gelagert, der einen in Richtung auf die Schalthebel 18, 19 zu vorstehenden Fortsatz 29 aufweist. Der Wählfinger 28 wirkt dabei mit Hebelarmen 30, 31 der Schalthebel 18, 19 zusammen, um alternativ den einen oder den anderen Schalthebel 18, 19 im Takt der Bewegung des Trägers 24 von den zwischen den Schalthebeln 8, 9 laufenden Scheiben weg zu schwenken.

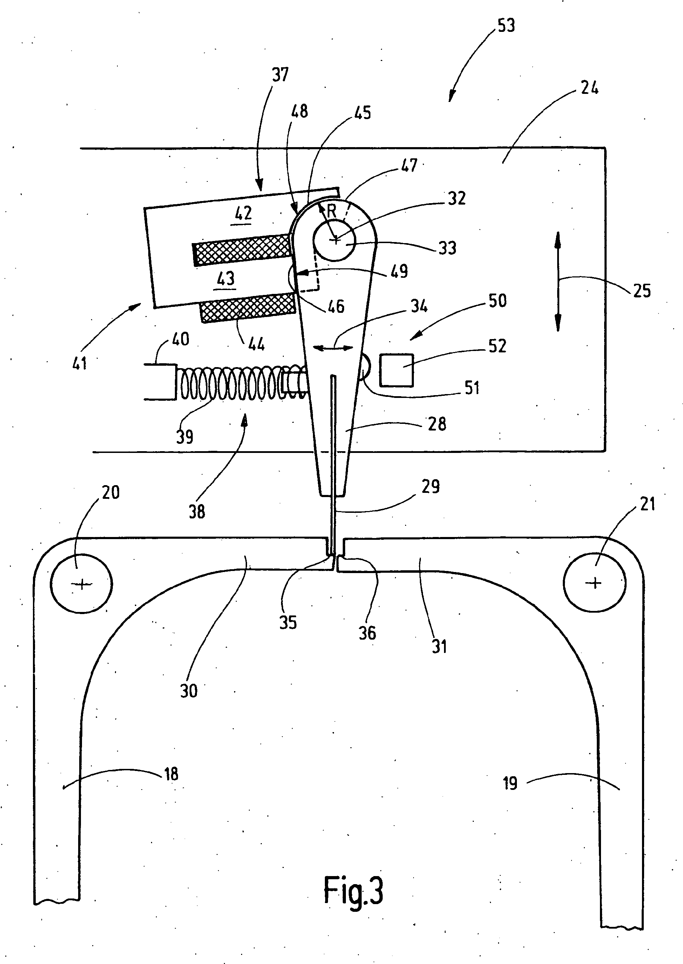

Dazu ist der Wählfinger 28 an dem Träger 24 um ein Schwenkzentrum 32 schwenkbar gelagert, das durch einen mit dem Träger 24 verbundenen Zapfen 33 gebildet sein kann, wie insbesondere aus der näheren Darstellung der Figur 3 hervorgeht. Die Schwenkbewegung des Wählfingers 28 ist in Figur 3 durch einen Pfeil 34 symbolisiert. Der Fortsatz 29 drückt alternativ gegen eine Anlagefläche 35 des Hebelarms 30 oder eine Anlagefläche 36 des Hebelarms 31. Die Anlageflächen 35, 36 begrenzen Ausnehmungen in den Enden der Hebelarme 30, 31. Sie können gerundet sein, um beim Schwenken mit dem Fortsatz 29 einen reibungsarmen Wälzeingriff festzulegen. In Ruhestellung stehen die Hebelarme 30, 31 einander eng gegenüber. Die beiden in ihnen stirnseitig ausgebildeten Ausnehmungen begrenzen einen gemeinsamen Raum, durch den der Fortsatz 29 in einer Pendelbewegung laufen kann, um alternativ entweder mit der Anlagefläche 35 oder alternativ mit der von ihr nur durch einen Spalt getrennten Anlagefläche 36 in Eingriff zu kommen.

Auf dem Träger 24 ist in unmittelbarer Nachbarschaft zu dem Schwenkzentrum 32 bzw. Zapfen 33 ein Elektromagnet 37 angeordnet, der dazu dient, den Wählfinger 28 gezielt, z.B. gegen die Kraft eines Federmittels 38 zu bewegen. Das Federmittel 38 kann durch verschiedene Elemente gebildet werden. Im vorliegenden Ausführungsbeispiel wird es durch eine Druckfeder 39 realisiert, die sich mit einem Ende an dem Wählfinger 28 und mit dem anderen Ende an einem Widerlager 40 abstützt, das an dem Träger 24 vorgesehen ist.

Der Elektromagnet 37 weist vorzugsweise einen aus Eisen, Ferrit oder einem anderen weichmagnetischen Material bestehenden Kern 41 mit zwei Schenkeln 42, 43 auf, die an einem Ende miteinander verbunden sind und zu einem Magnetkreis gehören. Wenigstens einer der Schenkel 42, 43 trägt eine Magnetspule 44. An den Enden der Schenkel 42, 43 sind Pole 45, 46 ausgebildet. Der erste Pol 45 wird durch eine einem Kreisbogen um das Drehzentrum 32 folgende Endfläche begrenzt. Der zweite an dem Schenkel 43 ausgebildete Pol 46 kann durch eine ebene Fläche gebildet werden.

An dem Wählfinger 28 ist ein Anker 47 starr gelagert, der aus einem vorzugsweise weichmagnetischen magnetisch leitfähigen Material, wie beispielsweise Eisen oder Ferrit besteht. Der Anker 47 ist in Nachbarschaft zu dem ersten Pol 45 mit einer kreisbogenförmig gekrümmten Fläche mit konstantem Radius bezüglich des Schwenkzentrums 32 versehen. Außerdem erstreckt sich die entsprechend gekrümmte Außenseite des Ankers 47 in Umfangsrichtung über die Enden des Pols 45 hinaus. Zwischen dem Anker 47 und dem Pol 45 ist ein kreisbogenförmig gekrümmter enger Luftspalt 48 mit konstantem Radius R zu dem Schwenkzentrum 32 angeordnet.

Ein vorzugsweise gerader Schenkel des Ankers 47 erstreckt sich zu dem zweiten Pol 46, der beispielsweise eine ebene Endfläche aufweist. Entsprechend weist der Anker 47 in diesem Bereich eine ebene Fläche auf und begrenzt mit dem zweiten Pol 46 einen Luftspalt 49. Die Länge des Luftspalts, der Abstand der sich gegenüberstehenden Oberfläche des Ankers 47 und der Oberfläche des Pols 46, hängt von der Schwenkstellung des Wählfingers 28 ab. Sie ist minimal oder Null, wenn der Wählfinger 28 in der in Figur 3 linken Position gegen die Kraft des Federmittels 38 mit dem Hebelarm 30 in Eingriff steht. Sie ist maximal, wenn der Wählfinger 28 in Figur 3 nach rechts geschwenkt ist und mit dem Hebelarm 31 in Eingriff steht.

Dem Wählfinger 28 kann ein Anschlag- oder Hubbegrenzungsmittel 50 zugeordnet sein. Zu diesem kann ein an dem Wählfinger 28 vorgesehener schalldämpfender Puffer 51 sowie ein an dem Träger 24 angeordnetes entsprechendes Widerlager 52 gehören. Der Puffer 51 und/oder das Widerlager 52 können aus einem vibrationshemmenden Dämpfungsmaterial, wie beispielsweise einem Kunststoff mit hoher innerer Reibung bestehen. Der Träger 24, der ihm zugeordnete Antrieb sowie der Wählfinger 28 und der Elektromagnet 37 bilden eine Steuereinrichtung 53 für die Kupplungsanordnung 11. Diese Steuereinrichtung 53 arbeitet wie folgt:

In Betrieb vollführt der Träger 24 die durch den Pfeil 25 bezeichnete oszillierende Bewegung. Im Rahmen dieser trifft der Fortsatz 29 entweder auf die Anlagefläche 35 oder auf die Anlagefläche 36, je nachdem welche Schwenkstelle er einnimmt. Ist der Elektromagnet 37 stromlos drängt das Federmittel 38 den Wählfinger 28 in Ruheposition. Er schwenkt in eine Position, in der der Puffer 51 seine Anlage an dem Widerlager 52 findet. Läuft der Träger 24 nun abwärts, trifft der Fortsatz 29 auf die Anlagefläche 36 des Hebelarms 31. In diesem Zustand hat der Luftspalt 48 einen festgelegten, von seiner Länge und Breite abhängigen Widerstand. Der Luftspalt 49 hat einen prinzipiell von der Position des Wählfingers 28 abhängigen magnetischen Widerstand, der wegen der Entfernung des Ankers 47 von dem zweiten Pol 46 den größeren von zwei Werten hat.

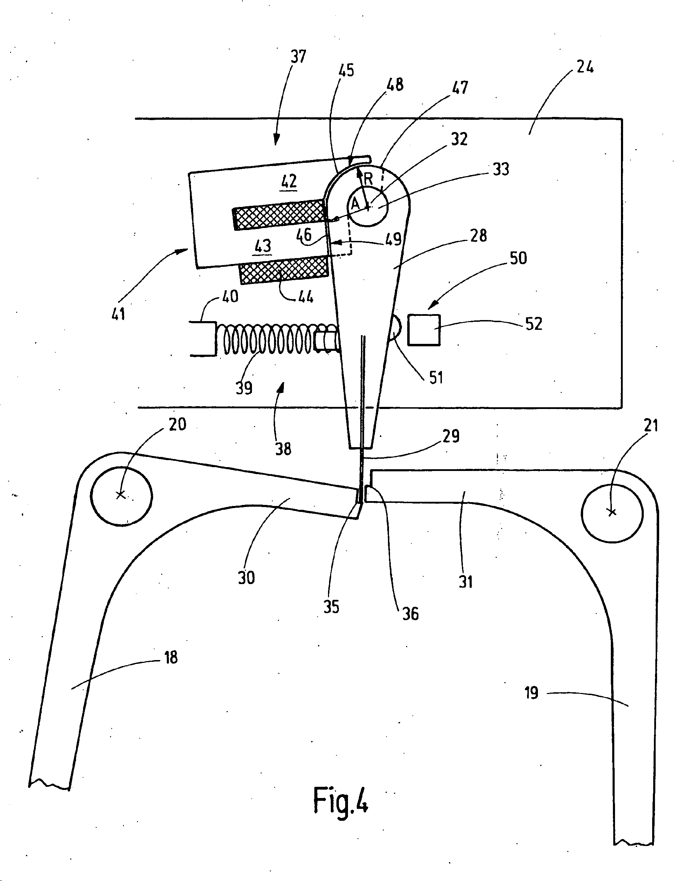

Wenn sich der Träger 24 in einer oberen von den Hebelarmen 30, 31 entfernten Position im Rahmen seiner Oszillation befindet, kann der Elektromagnet 37 bestromt werden. Der Pol 46 zieht nun den Anker 47 an, wodurch der Wählfinger 28 in die in Figur 4 dargestellte Position nach links schwenkt und sich der Luftspalt 49, der Abstand der sich gegenüberstehenden Ankeroberfläche und Poloberfläche verkürzt. Der Luftspalt 48 bleibt hingegen unverändert. Der magnetische Widerstand des Luftspalts 49 nimmt nun den geringeren von zwei Werten an. Schwingt der Träger 24 nun nach unten, drückt der Fortsatz 29 gegen die Anlagefläche 35 und verschwenkt den Schalthebel 18, wie Figur 4 zeigt. Der Fortsatz 29 kommt dann mit der Anlagefläche 35 des Hebelarms 30 in Eingriff.

Weil der magnetische Widerstand des ersten Luftspalts 48 unabhängig von der Schwenkposition des Wählfingers 28 konstant bleibt, wird einer zu starken Schwächung des Magnetfelds bei offenem Luftspalt 49 entgegen gewirkt. Der Elektromagnet 37 hat somit eine relativ hohe anfängliche Zugkraft und kann den Wählfinger 28 sehr schnell beschleunigen. Dem kommt auch entgegen, dass der zweite Pol 46 an einer Stelle beginnt, deren Abstand A (Figur 4) von dem Schwenkzentrum 32 im Wesentlichen mit dem Radius R übereinstimmt.

Die vorstehende Beschreibung bezieht sich auf ein Ausführungsbeispiel der Erfindung an dem zahlreiche Variationen möglich sind. Beispielsweise kann zusätzlich zu dem Anschlag- und Hubbegrenzungsmittel 50, das auf einer Seite des Wählfingers 28 angeordnet ist, auch an der gegenüber liegenden Seite ein entsprechendes Anschlag- und Hubbegrenzungsmittel vorgesehen sein. Alternativ kann das Anschlag-und Hubbegrenzungsmittel 50 auch weg gelassen werden. Dies ist insbesondere dann möglich, wenn der Hub des Trägers 24 so gering ist, dass der Fortsatz 29 nie ganz aus den von den Anlageflächen 35, 36 begrenzten Ausnehmungen herausfährt. Es können dann die sich etwa parallel zu dem Fortsatz 29 erstreckenden Partien der Anlageflächen 35, 36 als Anschlag- und Hubbegrenzungsmittel dienen.

Des Weiteren kann der Pol 46 des Elektromagneten 37 als Anschlag- und Hubbegrenzungsmittel dienen. In diesem Fall geht die Länge des Luftspalts 49 auf Null, wenn der Elektromagnet 37 anzieht und der Wählfinger 28 entsprechend schwenkt. Es kann an dem Pol 46 und/oder dem Anker 47 ein nicht magnetisches Abstandsstück, z.B. aus Kunststoff, Messing, Aluminium oder dergleichen vorgesehen sein, um bei erregtem Elektromagneten 47 einen Restluftspalt aufrecht zu erhalten.

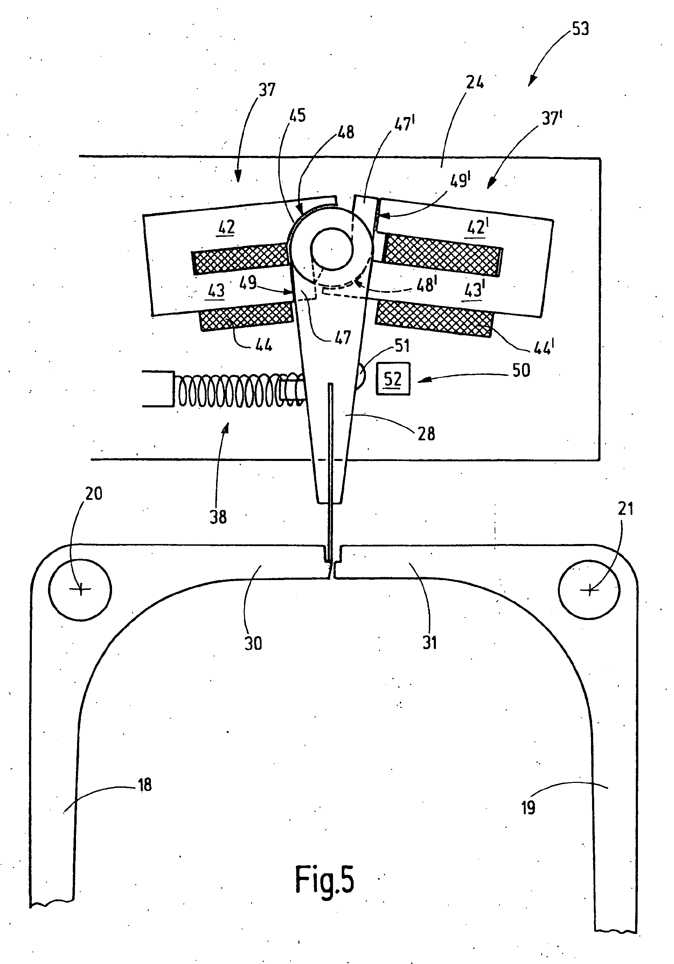

Figur 5 veranschaulicht eine abgewandelte Ausführungsform, zu deren Erläuterung unter Zugrundelegung gleicher Bezugszeichen auf die vorige Beschreibung verwiesen wird. Zusätzlich weist die Steuereinrichtung 53 nach Figur 5 einen zweiten Elektromagneten 37' auf, dem ein starr mit dem Wählfinger 28 verbundener Anker 47' zugeordnet ist. Die so gebildete Schwenkantriebseinrichtung ist identisch zu der aus dem Anker 47 und dem Elektromagneten 37 ausgebildeten Antriebseinrichtung aufgebaut. Entsprechend wird unter Zugrundelegung gleicher, lediglich mit einem Apostroph versehener Bezugszeichen auf die vorige Beschreibung verwiesen, die entsprechend gilt. Beide Antriebseinrichtungen (Elektromagnet 37 und Anker 47 sowie Elektromagnet 37' und Anker 47') arbeiten gleichsinnig antreibend. Beide erzeugen bei Bestromung ihrer Elektromagneten 37, 37' ein Drehmoment, das der Kraft des Federmittels 38 entgegen gerichtet ist.

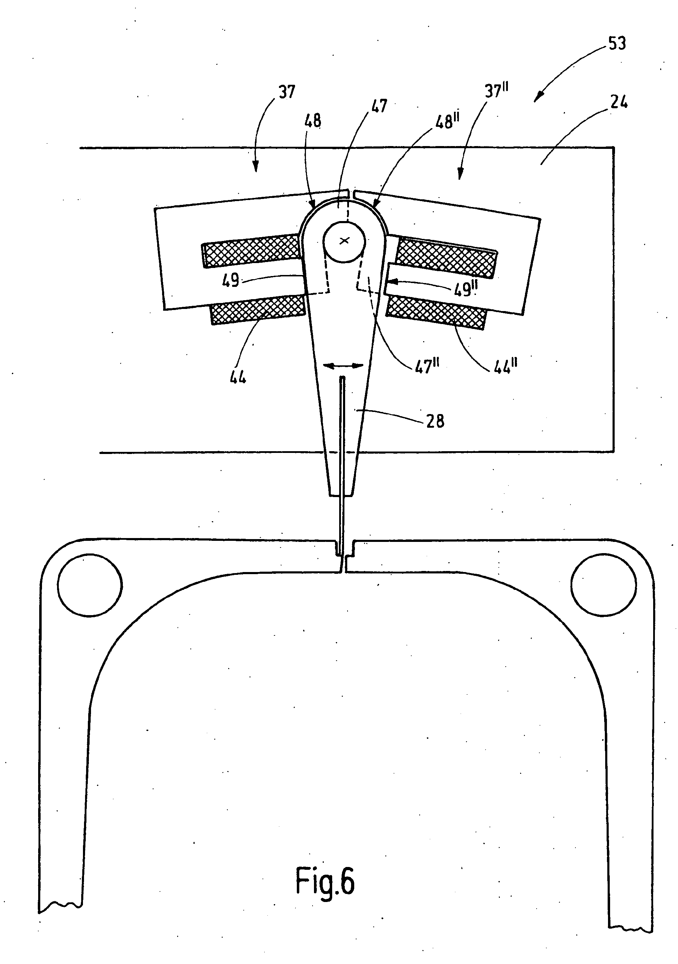

In einer weiteren Abwandlung ist es jedoch auch möglich, auf das Federmittel 38 zu verzichten. Eine solche Steuereinrichtung 53 ist in Figur 6 veranschaulicht. Bei dieser trägt der Träger 24 die schon im Zusammenhang mit den vorstehenden Ausführungsformen beschriebene aus dem Elektromagneten 37 und dem Anker 47 bestehende Antriebseinrichtung. Außerdem ist eine zweite Antriebseinrichtung vorgesehen, die aus einem Elektromagneten 37" und einem Anker 47"besteht. Letztgenannte Antriebseinrichtung ist spiegelsymmetrisch zu der erstgenannten Antriebseinrichtung aufgebaut, wobei ansonsten die vorstehende Beschreibung entsprechend gilt. Während die erstgenannte in Figur 6 linke Antriebseinrichtung den Wählfinger 28 im Uhrzeigersinne dreht, dreht die zweitgenannte, in Figur 6 rechte Antriebseinrichtung den Wählfinger 28 in Gegenuhrzeigerrichtung. Das Hin- und Herschwenken des Wählfingers 28 erfolgt durch alternatives Bestromen der Spule 44 oder 44".

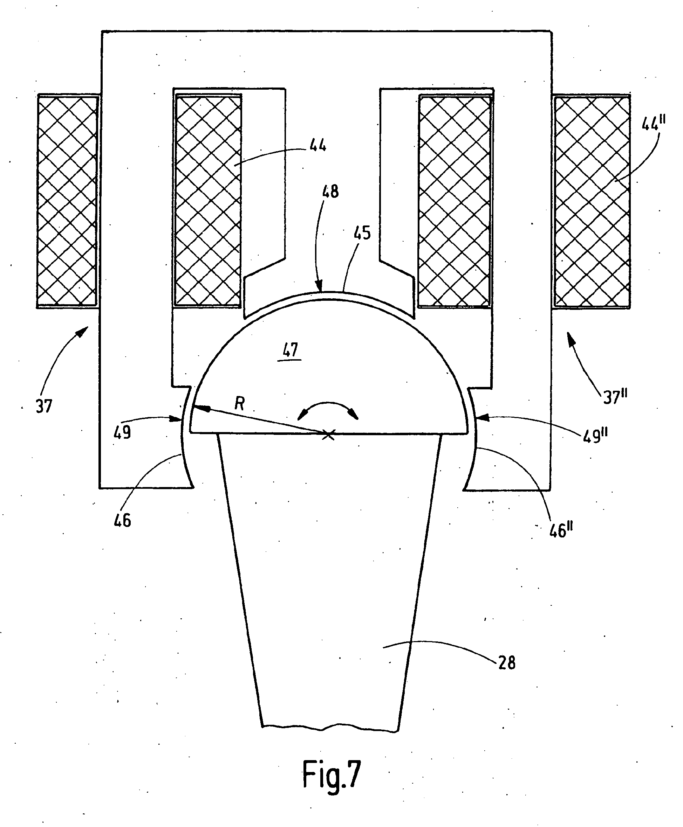

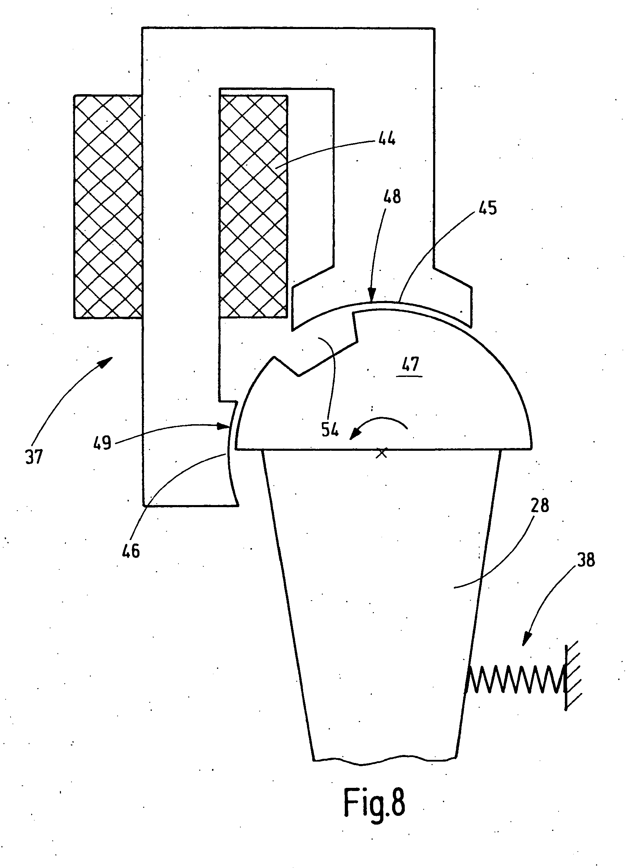

Während die vorgenannten Ausführungsbeispiele Antriebseinrichtungen für den Wählfinger 28 erläutern, bei denen die Antriebskraft für den Wählfinger 28 durch Veränderung der Länge eines Luftspalts erzielt wird, veranschaulichen die Ausführungsformen nach Figur 7 und 8 Beispiele, bei denen zum Antrieb des Wählfingers 28 die Veränderung der Größe der Fläche des Luftspalts genutzt wird. Soweit Bau- und Funktionsähnlich- bzw. -gleichheit zu den vorgenannten Ausführungsformen besteht, werden entsprechende Bezugszeichen verwendet und es wird auf die vorige Beschreibung verwiesen.

Bei dem Ausführungsbeispiel nach Figur 7 ist der erste an dem ersten Pol 45 ausgebildete Luftspalt 48 wiederum unabhängig von der Position des Wählfingers 28. Auch der zweite Luftspalt 49 ist nun mit dem Radius R gekrümmt. Der Anker 47 überdeckt jedoch nur einen Teil des Pols 46, wobei die Überdeckung mit einer Schwenkbewegung des Wählfingers 28 zu- oder abnimmt. Entsprechend ändert sich die Luftspaltfläche. An der gegenüber liegenden Seite ist ein Luftspalt 49" vorgesehen, dessen Größe sich zu der des Luftspalts 49 gegensinnig ändert. Der Anker 47 erstreckt sich von dem Pol 46 an dem Pol 45 vorbei bis zu dem Pol 46''. Bei Bestromung der in Figur 7 linken Spule 44 schwenkt der Wählfinger 28 gegen den Uhrzeigersinn, weil die magnetische Kraft des gebildeten Magnetkreises die Tendenz hat, die Überdeckung zwischen dem Anker 47 und dem Pol 46 zu vergrößern. Entsprechend schwenkt der Wählfinger 28 im Uhrzeigersinn, wenn nur die rechte Spule 44'' bestromt wird. Die Wirkungsweise der magnetischen Kraft kann dadurch verstärkt werden, dass die Oberfläche des Pols 46 und die Oberfläche des Pols 46" sowie die Oberfläche des Ankers 47 Aussparungen und Hervorhebungen aufweisen. Die Oberflächen sind dann in Form von gezahnten Flächen gebildet, wobei die Form der Hervorhebungen bzw. Zähne rechteckförmig, trapezförmig oder andersförmig gebildet sein können. Durch die Anordnung von gezahnten Oberflächen erhöht sich die Anzahl der außerhalb des Drehpunktes des Ankers 47 wirkenden magnetischen Feldlinien und somit verstärkt sich das Drehmoment des Ankers 47.

Figur 8 veranschaulicht eine weiter abgewandelte Ausführungsform, die auf der Ausführungsform nach Figur 7 beruht, wobei jedoch die rechte Spule 44'' weg gelassen ist. Außerdem weist der Anker 47 in der Nähe des Pols 45 eine Ausnehmung 54 auf, so dass der Anker 47 nun sowohl den Pol 45 als auch den Pol 46 nur teilweise überdeckt. Somit sind sowohl der Luftspalt 48 als auch der Luftspalt 49 jeweils im gleichen Sinne veränderlich. Wird die Spule 44 bestromt, hat die von dem Magnetkreis erzeugte magnetische Kraft sowohl die Überdeckung des Ankers 47 mit dem Pol 45 als auch die Überdeckung des Ankers 47 mit dem Pol 46 zu vergrößern. Der Wählfinger 28 schwenkt somit nach rechts. Zur Rückstellung kann wiederum das Federmittel 38 dienen.

Eine Steuereinrichtung 53 für eine Kupplungsanordnung in Form einer Schaltkupplung 11 einer Schaftmaschine weist einen Wählfinger 28 auf, der von einem Elektromagneten 37 angetrieben ist. Der Wählfinger ist starr mit einem Anker 47 verbunden, der einen gekrümmten Ankerabschnitt und einen geraden Ankerabschnitt aufweist. Der gekrümmte Ankerabschnitt bildet mit einem entsprechend gekrümmten Pol 45 des Magnetkreises einen Luftspalt 48, der von der Schwenkposition des Wählfingers vorzugsweise unbeeinflusst ist. Der andere Pol 46 des Elektromagneten 37 bildet einen vorzugsweise geraden Luftspalt 49, der variabel ist und dessen Größe von der Schwenkstellung des Wählfingers abhängt. Die maximale Breite des trapezförmigen Spalts ist aufgrund der herrschenden Hebelverhältnisse wesentlich kleiner als der Weg des äußeren Endes des Wählfingers 28 zwischen seinen beiden Auswahlstellungen. Der Abstand A zwischen dem Drehzentrum 32 und dem veränderlichen Luftspalt 49 ist wesentlich geringer als die Länge des Wählfingers 28. Bezugszeichen
- 1: Webschaft
- 2: Pfeil
- 3: Schaftmaschine
- 4: Schwinge
- 5: Gestänge
- 6, 7: Laschen
- 8, 9: Winkelhebel
- 10: Welle
- 11: Kupplungsanordnung
- 12: Wippe
- 13, 14: Nasen
- 15, 16: Ausnehmungen
- 17: Rolle
- 18, 19: Schalthebel
- 20, 21: Schwenkachsen
- 22, 23: Federmittel
- 24: Träger
- 25: Pfeil
- 26: Hebel
- 27: Kurvenscheibe
- 28: Wählfinger
- 29: Fortsatz
- 30, 31: Hebelarme
- 32: Schwenkzentrum
- 33: Zapfen
- 34: Pfeil
- 35, 36: Anlageflächen
- 37: Elektromagnet
- 38: Federmittel
- 39: Druckfeder
- 40: Widerlager
- 41: Kern
- 42, 43: Schenkel
- 44: Spule
- 45, 46: Pole
- 47: Anker
- 48, 49: Luftspalte
- R: Radius
- 50: Anschlag- oder Hubbegrenzungsmittel
- 51: Puffer
- 52: Widerlager
- 53: Steuereinrichtung
- A: Abstand
- 54: Ausnehmung

## Patentansprüche

1. Steuereinrichtung (53) für eine Schaltkupplung (11) einer Schaftmaschine,
mit einem Träger (24),
mit einem Wählfinger (28), der an dem Träger (24) um ein Schwenkzentrum (32) schwenkbar gelagert ist und einen magnetisch leitfähigen Anker (47) enthält,
mit einem Elektromagneten (37), der an dem Träger (24) ruhend gelagert ist und einen Kern (41) mit zwei Polen (45, 46) aufweist,
**dadurch gekennzeichnet, dass**
der erste Pol (45) mit dem Anker (47) einen ersten Luftspalt (48) festlegt, der kreisbogenförmig mit einem konstanten Radius (R) zu dem Schwenkzentrum (32) gekrümmt ist, und
der zweite Pol (46) mit dem Anker (47) einen zweiten, in seiner Größe von einer Schwenkbewegung des Wählfingers (28) abhängigen Luftspalt (49) festlegt.

2. Steuereinrichtung nach Anspruch 1, **dadurch gekennzeichnet, dass** der erste Luftspalt (48) als konstanter, von einer Schwenkbewegung des Wählfingers (28) unbeeinflusster Luftspalt (48) ausgebildet ist.

3. Steuereinrichtung nach Anspruch 1, **dadurch gekennzeichnet, dass** der zweite Luftspalt (49) eine von der Schwenkstellung des Wählfingers (28) abhängige Spaltlänge aufweist, die als Abstand zwischen dem zweiten Pol (46) und dem Anker (47) zu messen ist.

4. Steuereinrichtung nach Anspruch 1, **dadurch gekennzeichnet, dass** der zweite Luftspalt (49) im Querschnitt trapezförmig ausgebildet ist.

5. Steuereinrichtung nach Anspruch 1, **dadurch gekennzeichnet, dass** der zweite Luftspalt (49) eine von der Schwenkstellung des Wählfingers (28) abhängige Spaltbreite aufweist, die als parallel zu den den Luftspalt (49) begrenzenden Flächen des Pols (46) und des Ankers (47) zu messen ist.

6. Steuereinrichtung nach Anspruch 1, **dadurch gekennzeichnet, dass** dem Wählfinger (28) ein Federmittel (38) zugeordnet ist, um ihn gegen die Kraft des Elektromagneten (37) vorzuspannen und bei stromlosem Elektromagneten (37) in eine Ruheposition zu drängen.

7. Steuereinrichtung nach Anspruch 1, **dadurch gekennzeichnet, dass** dem Wählfinger (28) ein Anschlagmittel (50) zugeordnet ist, um ihn bei bestromtem Elektromagneten (37) in einer definierten Arbeitsposition zu halten.

8. Steuereinrichtung nach Anspruch 1, **dadurch gekennzeichnet, dass** dem Wählfinger (28) ein zweiter Elektromagnet (37', 37") zugeordnet ist, um ihn anzutreiben.

9. Steuereinrichtung nach Anspruch 8, **dadurch gekennzeichnet, dass** der zweite Elektromagnet (37', 37") den Wählfinger (28) in der gleichen Antriebsrichtung antreibt wie der erste Elektromagnet.

10. Steuereinrichtung nach Anspruch 8, **dadurch gekennzeichnet, dass** der zweite Elektromagnet (37', 37") den Wählfinger (28) in einer anderen Antriebsrichtung antreibt als der erste Elektromagnet (37).

## Claims

1. Control device (53) for a clutch (11) of a heald loom,
with a support (24),
with a selector finger (28), which is mounted on the support (24) to pivot around a pivoting centre (32) and contains a magnetically conductive armature (47),
with an electromagnet (37), which is mounted to rest on the support (24) and has a core (42) with two poles (45, 46),
**characterised in that**
with the armature (47) the first pole (45) defines a first air gap (48), which is curved to the pivoting centre (32) in the shape of a circular arc with a constant radius (R), and with the armature (47) the second pole (46) defines a second air gap (49), the size of which is dependent on a pivoting movement of the selector finger (28).

2. Control device according to claim 1, **characterised in that** the first air gap (48) is configured as a constant air gap (48), which is not influenced by a pivoting movement of the selector finger (28).

3. Control device according to claim 1, **characterised in that** the second air gap (49) has a gap length, which is dependent on the pivoting position of the selector finger (28) and is to be measured as a distance between the second pole (46) and the armature (47).

4. Control device according to claim 1, **characterised in that** the second air gap (49) is trapezoidal in cross-section.

5. Control device according to claim 1, **characterised in that** the second air gap (49) has a gap width, which is dependent on the pivoting position of the selector finger (28) and is to be measured as parallel to the surfaces of the pole (46) and the armature (47) delimiting the air gap (49).

6. Control device according to claim 1, **characterised in that** the selector finger (28) has an associated spring element (38) to bias it against the force of the electromagnet (37) and to push it into a resting position when the electromagnetic (37) is without current.

7. Control device according to claim 1, **characterised in that** the selector finger (28) has an associated stop element (50) to hold it in a defined working position when the electromagnet (37) is supplied with current.

8. Control device according to claim 1, **characterised in that** a second electromagnet (37', 37") is associated with the selector finger (28) to drive it.

9. Control device according to claim 8, **characterised in that** the second electromagnet (37', 37") drives the selector finger (28) in the same drive direction as the first electromagnet.

10. Control device according to claim 8, **characterised in that** the second electromagnet (37', 37") drives the selector finger (28) in a different drive direction from the first electromagnet (37).

## Revendications

1. Dispositif de commande (53) pour un embrayage (11) d'une ratière,
comprenant un support (24),
comprenant un doigt sélecteur (28) qui est monté pivotant autour d'un centre de pivotement (32) sur le support (24) et qui contient un induit (47) magnétiquement conducteur,
comprenant un électro-aimant (37) qui est monté fixe sur le support (24) et comporte un noyau (41) avec deux pôles (45, 46),
**caractérisé en ce que**
le premier pôle (45) définit avec l'induit (47) un premier entrefer (48) qui est courbé en arc de cercle de rayon constant (R) par rapport au centre de pivotement (32), et
le deuxième pôle (46) définit avec l'induit (47) un deuxième entrefer (49) dont la dimension dépend d'un mouvement de pivotement du doigt sélecteur (28).

2. Dispositif de commande selon la revendication 1, **caractérisé en ce que** le premier entrefer (48) est réalisé sous la forme d'un entrefer (48) constant, non influencé par un mouvement de pivotement du doigt sélecteur (28).

3. Dispositif de commande selon la revendication 1, **caractérisé en ce que** le deuxième entrefer (49) présente une longueur d'entrefer qui est dépendante de la position de pivotement du doigt sélecteur (28) et qui se mesure par la distance entre le deuxième pôle (46) et l'induit (47).

4. Dispositif de commande selon la revendication 1, **caractérisé en ce que**, en coupe transversale, le deuxième entrefer (49) est conformé en trapèze.

5. Dispositif de commande selon la revendication 1, **caractérisé en ce que** le deuxième entrefer (49) présente une largeur d'entrefer qui est dépendante de la position de pivotement du doigt sélecteur (28) et qui se mesure parallèlement aux surfaces du pôle (46) et de l'induit (47) qui limitent l'entrefer (49).

6. Dispositif de commande selon la revendication 1, **caractérisé en ce qu'**un moyen élastique (38) est associé au doigt sélecteur (28) pour le précontraindre contre la force de l'électro-aimant (37) et le pousser dans une position de repos quand l'électro-aimant (37) n'est pas alimenté.

7. Dispositif de commande selon la revendication 1, **caractérisé en ce qu'**un moyen de butée (50) est associé au doigt sélecteur (28) pour le maintenir dans une position de travail définie quand l'électro-aimant (37) est alimenté.

8. Dispositif de commande selon la revendication 1, **caractérisé en ce qu'**un deuxième électro-aimant (37', 37") est associé au doigt sélecteur (28) pour l'entraîner.

9. Dispositif de commande selon la revendication 8, **caractérisé en ce que** le deuxième électro-aimant (37', 37") entraîne le doigt sélecteur (28) dans la même direction d'entraînement que le premier électro-aimant.

10. Dispositif de commande selon la revendication 8, **caractérisé en ce que** le deuxième électro-aimant (37', 37") entraîne le doigt sélecteur (28) dans une autre direction d'entraînement que le premier électro-aimant (37).
